# EUROPÄISCHE PATENTSCHRIFT

(11) **EP 1 057 068 B1**
(45) Veröffentlichungstag und Bekanntmachung des Hinweises auf die Patenterteilung: **19.04.2006**
(21) Anmeldenummer: 99964371.1
(22) Anmeldetag: 24.11.1999
(51) Int. Cl.: G02B 26/08

(54) **MIKROSCHWINGSPIEGEL**
DEFLECTABLE MICRO-MIRROR
Micro-miroir oscillant

(30) Priorität: 16.12.1998 DE 19857946
(43) Veröffentlichungstag der Anmeldung: 06.12.2000
(73) Patentinhaber: ROBERT BOSCH GMBH, 70442 Stuttgart (DE)
(72) Erfinder: HERRMANN, Falk, D-71229 Leonberg (DE)
(86) Internationale Anmeldenummer: PCT/DE1999/003725
(87) Internationale Veröffentlichungsnummer: WO 2000/036452

(56) Entgegenhaltungen:
- DE-A- 19 709 913
- US-A- 5 661 591
- HORNBECK L J: "DEFORMABLE-MIRROR SPATIAL LIGHT MODULATORS" SPATIAL LIGHT MODULATORS AND APPLICATIONS III, 7-8 AUGUST 1989, SAN DIEGO, 7. August 1989 (1989-08-07), Seiten 86-102, XP000351394
- JAECKLIN V P ET AL: "OPTICAL MICROSHUTTERS AND TORSIONAL MICROMIRRORS FOR LIGHT MODULATOR ARRAYS" PROCEEDINGS OF THE WORKSHOP ON MICRO ELECTRO MECHANICAL SYSTEMS (MEMS),US,NEW YORK, IEEE, Bd. WORKSHOP 6, 1993, Seiten 124-127, XP000366867 ISBN: 0-7803-0957-X in der Anmeldung erwähnt
- PETERSEN K E: "SILICON TORSIONAL SCANNING MIRROR" IBM JOURNAL OF RESEARCH AND DEVELOPMENT,US,IBM CORPORATION, ARMONK, Bd. 24, Nr. 5, 1. September 1980 (1980-09-01), Seiten 631-637, XP000605012 ISSN: 0018-8646 in der Anmeldung erwähnt
- JAECKLIN V P ET AL: "MECHANICAL AND OPTICAL PROPERTIES OF SURFACE MICROMACHINED TORSIONAL MIRRORS IN SILICON, POLYSILICON AND ALUMINUM" SENSORS AND ACTUATORS A,CH,ELSEVIER SEQUOIA S.A., LAUSANNE, Bd. A43, Nr. 1/03, 1. Mai 1994 (1994-05-01), Seiten 269-275, XP000454122 ISSN: 0924-4247
- HORNBECK L J: "DIGITAL LIGHT PROCESSING TM FOR HIGH-BRIGHTNESS, HIGH-RESOLUTION APPLICATIONS" PROCEEDINGS OF THE SPIE,1997, XP000862885

## Beschreibung

### Stand der Technik

Die Erfindung betrifft einen Mikrospiegel nach Gattung des unabhängigen Anspruches.

Derartige Mikroschwingspiegel sind beispielsweise in Form eines abbildendes Hohlspiegels aus der Veröffentlichung "Micro-Electro-Mechanical Focusing Mirrors", IEEE, (MEMS 1998), Catalog. Nr. 98CH36176, Seite 460-465 von D.M. Burns und V.M. Bright bekannt und haben vielfältige technische Einsatzgebiete wie beispielsweise in Displays, Scannern und optischen Überwachungssystemen. Sie werden in der Regel in Siliziumtechnologie auf einem Siliziumwafer realisiert, wobei im Fall von großen Spiegelflächen mit bis zu mehreren mm² Oberfläche, wie sie für den Einsatz in Baulasern oder in Systemen zur PKW-Innenraumüberwachung benötigt werden, häufig die gesamte Waferdicke als Raum zur Auslenkung des Spiegels genutzt wird. Die Anregung der Schwingung des Mikrospiegels erfolgt dabei vielfach elektrostatisch. Eine besondere Schwierigkeit bei derartigen Mikroschwingspiegeln mit großer Spiegelfläche tritt bei gleichzeitig großen Schwingungsamplituden (mehrere 10°) auf, wie sie für die genannten Anwendungen ebenfalls vielfach erforderlich sind. Im Fall einer elektrostatischen Anregung der Schwingung des Mikrospiegels, die über entsprechend unterhalb des Spiegels angebrachte Elektroden erzielt wird, sind zur Erreichung derartiger Schwingungsamplituden Spannungen von bis zu mehreren hundert Volt erforderlich (siehe Petersen, IBM J.Res.Develop. 24 (1980) 631; Jaecklin et al., Proc. IEEE MEMS Workshop, Fl, USA (1993) 124). Deren Einsatz im PKW-Bereich und deren Erzeugung und Beherrschung auf einem mikromechanischen Bauteil ist problematisch. Sofern man den Mikroschwingspiegel resonant betreiben möchte, ist überdies eine aufwendige Auswerteelektronik erforderlich, die kleinste Kapazitätsänderungen zwischen Spiegelfläche und darunter befindlicher Anregungselektrode detektiert.

US 5,661,591 offenbart einen Mikroschwingspiegel mit voneinander entkoppelten Torsions- und Biegebalken

Aufgabe der vorliegenden Erfindung war es daher, einen Mikroschwingspiegel zu schaffen, der auch bei großer Spiegelfläche mit niedrigen Spannungen zu großen Schwingungsamplituden angeregt werden kann, so daß auch ein Einsatz in preisgünstigen Anwendungen möglich ist.

### Vorteile der Erfindung

Der erfindungsgemäße Mikrospiegel mit den kennzeichnenden Merkmalen des Hauptanspruches, hat gegenüber dem Stand der Technik den Vorteil, daß eine kleine Amplitude der Biegeschwingung ausreicht, um eine große Amplitude der durch die Biegeschwingung induzierten Torsionsschwingung der freitragenden Spiegelfläche um die durch den Torsionsbalken definierte Torsionsachse zu erzeugen. Insbesondere dann, wenn die Frequenz einer Biegeschwingung mit einer Resonanzfrequenz einer Torsionsschwingung übereinstimmt, ist die Amplitude dieser Torsionsschwingung besonders groß. Infolge der geringen Amplitude der Biegeschwingung ist die dadurch hervorgerufene Vertikalbewegung des Spiegels jedoch weiterhin sehr klein, so daß beispielsweise eine Defokussierung eines reflektierten Lichtstrahles vernachlässigbar ist.

Vorteilhafte Weiterbildungen der Erfindung ergeben sich aus den in den Unteransprüchen genannten Maßnahmen.

So kann die Spiegelfläche eine weitgehend beliebige geometrische Form annehmen und beispielsweise eine planare Scheibe, ein planares Rechteck, ein planares Quadrat sein oder die Form eines abbildenden Hohlspiegels mit kreisförmiger Grundfläche haben. Ihre Größe kann von einer typischen Seitenlänge von wenigen µm bis zu mehreren mm reichen.

Besonders vorteilhaft ist es, wenn an der Schwingspiegelfläche, die beispielsweise die Form eines Quadrates hat, sich zwei gegenüberliegende Torsionsbalken so angebracht sind, daß die dadurch definierte Torsionsachse nicht mit einer Symmetrieachse der Spiegelfläche zusammenfällt. Ebenso ist es vorteilhaft, wenn im Fall mehrerer Torsionsachsen mindestens eine der von der jeweiligen Zahl der Torsionsbalken gebildeten Torsionsachsen keine Symmetrieachse der Spiegelfläche ist.

Weiterhin ist es zur Vermeidung zu großer Amplituden der die Torsionsschwingung anregenden Biegeschwingung vorteilhaft, wenn die Frequenz der Biegeschwingung so eingestellt ist, daß die Resonanzfrequenzen der Biegeschwingung deutlich verschieden ist von der Resonanzfrequenz der Torsionsschwingung, so daß es bei einer Torsionsresonanzschwingung nicht gleichzeitig auch zu einer Biegeresonanzschwingung kommt. Die Resonanzfrequenz der Biegeschwingung(en) und/oder der Torsionsschwingung(en) können dabei sehr einfach und unabhängig voneinander über die Geometrie des Biegebalkens bzw. des Torsionsbalkens, über deren mechanische Eigenschaften sowie deren Zusammensetzung eingestellt werden.

Besonders einfach und effektiv läßt sich eine Torsionsschwingung der Spiegelfläche um eine durch einen Torsionsbalken definierte Torsionsachse über eine Biegeschwingung eines Biegebalkens anregen, wenn der Torsionsbalken und der damit verbundene Biegebalken nicht auf einer Linie oder Achse liegen und somit einen spitzen oder stumpfen Winkel einschließen. Insbesondere bei einem Winkel von 90° zwischen Torsionsbalken und Biegebalken ist das durch die Biegeschwingung hervorgerufene Drehmoment auf die Spiegelfläche um die Torsionsachse besonders groß.

Die Herstellung des erfindungsgemäßen Mikroschwingspiegels kann weiterhin sehr vorteilhaft und einfach erfolgen, wenn die Spiegelfläche, die Torsionsbalken und die Biegebalken aus einem Siliziumwafer herausstrukturiert werden, da man sich in diesem Fall der vielfältigen, an sich bekannten Ätztechniken und oberflächenmikromechanischen Strukturierungsverfahren auf Siliziumbasis bedienen kann.

Vorteilhaft ist im Fall der erfindungsgemäßen Erzeugung der Torsionsschwingung des Mikroschwingspiegels auch, insbesondere in Verbindung mit einer Herausstrukturierung aus einem Siliziumwafer, daß auf dem Wafer auch eine zusätzlich erforderliche elektrische Ansteuerung und Verschaltung des Mikroschwingspiegels untergebracht werden kann.

Die zur Erzeugung einer Torsionsschwingung erforderliche Anregung über eine Biegeschwingung kann in sehr vorteilhafter Weise dadurch erfolgen, daß auf dem Biegebalken zumindest einseitig mindestens ein mit dem Biegebalken verbundener thermoelektrischer oder piezoelektrischer Biegewandler angebracht ist, der Biegeschwingungen in dem Biegebalken induziert. Dies kann vorteilhaft dadurch erreicht werden kann, daß ein aus Silizium bestehender Biegebalken oberflächlich dotiert wird, und somit als thermoelektrischer Biegewandler einsetzbar ist.

Um die Resonanzfrequenz einer Torsionsschwingung der Spiegelfläche möglichst einfach einstellen zu können, wird vorteilhaft auf mindestens einem Torsionsbalken ein piezoresistiver oder ein piezoelektrischer Wandler, insbesondere in Form eines Dünnschichtwandlers angebracht, so daß dessen elektrische Eigenschaften oder dessen Meßsignal (Piezospannung) sich als Funktion der Amplitude und der Frequenz der Torsionsschwingung ändern. Somit kann das elektrische Signal dieses Wandlers auf dem Torsionsbalken in den Rückkoppelkreis eines Resonators eingekoppelt werde, der zur Anregung der Biegeschwingung über die auf den Biegebalken angebrachten thermomechanischen oder piezoelektrischen Biegewandler dient. Somit regelt das Meßsignal des die Amplitude der Torsionsschwingung detektierenden piezoresistiven oder piezoelektrischen Wandlers sehr vorteilhaft die Frequenz der Biegeschwingung.

Zur Vereinfachung der elektrischen Kontaktierung der auf den Torsionsbalken angebrachten piezoresistiven oder piezoelektrischen Wandler und/oder zur Herstellung einer elektrisch leitfähigen Verbindung zwischen diesen Wandlern auf den Torsionsbalken, sowie zur Herstellung einer elektrischen Verbindung zwischen den auf den Biegebalken zur Erzeugung der Biegeschwingung angebrachten thermoelektrischen oder piezoelektrischen Biegewandlern, ist es weiterhin sehr vorteilhaft, wenn die Spiegelfläche und/oder die Torsionsbalken und/oder die Biegebalken zumindest bereichsweise oberflächlich metallisiert sind.

Im übrigen ist es sehr vorteilhaft, daß der erfindungsgemäße Mikrospiegsl zur Erzeugung der Torsionsschwingung lediglich niedrige Spannungen und insbesondere keine Gegenelektrode, beispielsweise wie im Fall einer elektrostatischen Anregung, benötigt. Überdies kann der Herstellungsprozeß über an sich bekannte Verfahren geführt werden, und es ist insbesondere auch ein voll CMOS-kompatibeler Herstellungsprozeß möglich.

### Zeichnung

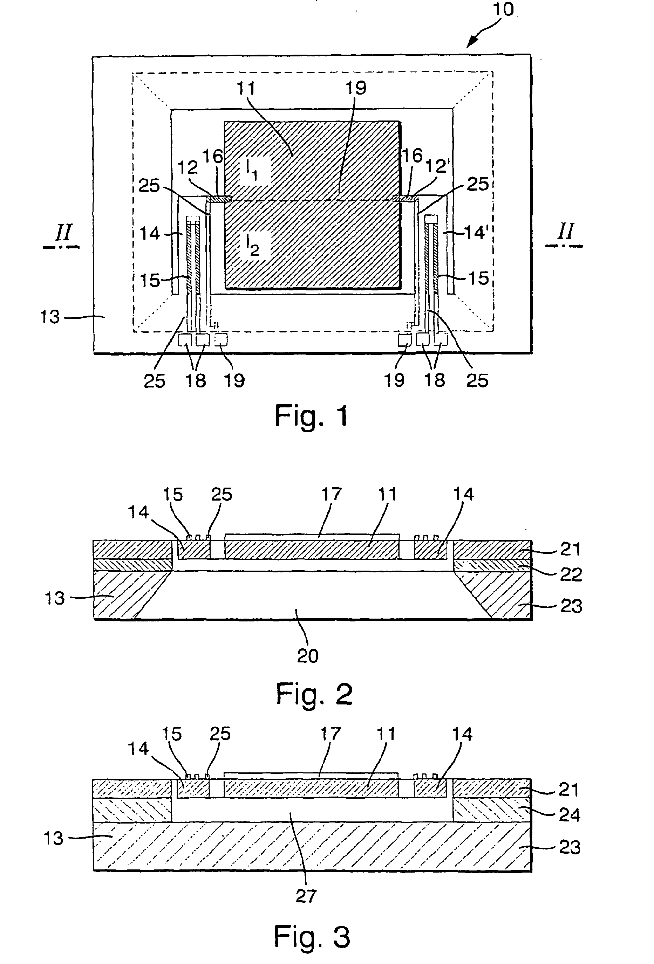

Ausführungsbeispiele der Erfindung werden anhand der Zeichnung und in der nachfolgenden Beschreibung näher erläutert. Es zeigen Figur 1 eine Draufsicht auf einen Mikroschwingspiegel, Figur 2 einen Schnitt durch Figur 1 und Figur 3 einen Schnitt durch ein weiteres Ausführungsbeispiel des Mikroschwingspiegels.

### Ausführungsbeispiele

Die Figuren 1 und 2 erläutern ein erstes Ausführungsbeispiel des Mikrospiegels und ein Verfahren zu seiner Herstellung. Figur 1 zeigt einen Mikroschwingspiegel 10 mit einer Spiegelfläche 11, die die Form eines Quadrates hat, und zwei damit verbundene Torsionsbalken 12, 12', die sich gegenüber liegend angeordnet sind und eine Torsionsachse 19 definieren. Die Torsionsbalken 12, 12' sind derart angebracht, daß die Torsionsachse 19 nicht mit einer Symmetrieachse der Spiegelfläche 11 zusammenfällt, so daß die Längenabschnitte 11 und 12 voneinander verschieden sind. Die Torsionsbalken 12, 12' sind weiterhin jeweils mit einem Biegebalken 14, 14' verbunden. Der Winkel zwischen Torsionsbalken 12, 12' und Biegebalken 14, 14' beträgt jeweils 90°. Die Biegebalken 14, 14' sind weiterhin mit einem die Spiegelfläche 11 zumindest bereichsweise umgebenden Tragkörper 13 verbunden, so daß die Spiegelfläche 11 freitragend ist und Torsionsschwingungen um die Torsionsachse 19 ausführen kann. Die Spiegelfläche 11 hat eine Kantenlänge von ca. 500 µm. Die Siegelfläche 11 kann aber auch eine Kantenlänge von wenigen µm bis zu mehreren mm aufweisen. Die Spiegelfläche 11, die Biegebalken 14, 14', die Torsionsbalken 12, 12' und der Tragkörper 13 bestehen im wesentlichen aus Silizium. Der Mikroschwingspiegel 10 ist insbesondere aus einem Siliziumwafer oder einem SOI-Wafer ("silicon-on-insulator") herausstrukturiert.

Zur Herstellung einer leitfähigen Verbindung und/oder zur Gewährleistung optimaler Reflektionseigenschaften beispielsweise im infraroten Wellenlängenbereich, ist die Spiegelfläche 11 oberflächlich vorzugsweise mit Gold metallisiert. Die Torsionsbalken 12, 12' sind oberflächlich mit einem an sich bekannten piezoresistiven oder piezoelektrischen Material als piezoresistiver oder piezoelektrischer Dünnschichtwandler 16 beschichtet, der als integrierter Dehnungsaufnehmer dient, so daß eine Torsion der Torsionsbalken 12, 12' über damit einhergehende mechanische Spannungen in den Dünnschichtwandlern 16 eine Widerstandsänderung oder die Erzeugung einer piezoelektrischen Spannung hervorruft, deren Größe proportional der Amplitude der Torsionsschwingung ist und deren Periodizität der Schwingungsperiode der Torsionsschwingung um die Torsionsachse 19 entspricht. Geeignete Materialien für den piezoresistiven oder piezoelektrischen Dünnschichtwandler 16 sind beispielsweise ZnO, A1N, dotiertes Silizium oder PZT. Der Dünnschichtwandler 16 kann dabei in Form einer Brücke aus mehreren Einzelwiderständen aufgebaut sein oder die gesamte Torsionsbalkenoberfläche als Widerstandsbahn nutzen.

Zur Verbindung der Dünnschichtwandler 16 auf den Torsionsbalken 12, 12' mit einer nicht dargestellten äußeren elektrischen Verschaltung verläuft auf den Biegebalken 14, 14' jeweils eine Leiterbahn 25, die die Dünnschichtwandler 16 mit elektrischen Anschlußkontakten 19 verbindet. Die Leiterbahn 25 ist wiederum in an sich bekannter Weise beispielsweise über eine Oberflächenmetallisierung der Biegebalken 14, 14' hergestellt, die insbesondere aus dem gleichen Metall wie die Oberflächenmetallisierung 17 der Spiegelfläche 11 besteht, und ist mit Hilfe einer geeigneten Maskierung strukturiert worden.

Auf den Biegebalken 14, 14' befindet sich jeweils ein thermomechanischer oder piezoelektrischer Biegewandler 15, der mit den Biegebalken innig verbunden ist. Dieser Biegewandler 15 ist ebenfalls über auf den Biegebalken 14, 14' verlaufenden Leiterbahnen 25, die ebenfalls über eine Oberflächenmetallisierung erzeugt wurden, mit elektrischen Anschlußkontakten 18 verbunden, so daß ein Anschluß an eine äußere elektrische Verschaltung möglich ist.

Bei Verwendung eines piezoelektrischen Biegewandlers 15 werden in diesen zunächst über eine von außen anliegende elektrische Spannung mechanische Spannungen induziert, die aufgrund des innigen Kontaktes mit den Biegebalken 14, 14' auch in diesen auf der Oberseite mechanische Spannungen induzieren, so daß es zu einer Verbiegung der Biegebalken 14, 14' kommt. Verändert sich die äußere elektrische Spannung periodisch an dem Biegewandler 15, so wird somit eine Biegeschwingung der Biegebalken 14, 14' induziert, deren Schwingungsamplitude eine Richtung parallel zu der Flächennormale der Spiegelfläche 11 hat. Die Richtung, Amplitude und Periode dieser Verbiegung bzw. Biegeschwingung der Biegebalken 14, 14' ist über die Polarität, Stärke und Periode der anliegenden elektrischen Spannung steuerbar.

Verwendet man in einem alternativen Ausführungsbeispiel einen thermoelektrischen Biegewandler 15, so wird entsprechend die Biegeschwingung über eine äußere elektrische Spannung erregt, die zu einer oberflächlichen Erwärmung der Biegebalken 14, 14' und somit ebenfalls zu mechanischen Spannungen und einer Verbiegung der Biegebalken 14, 14' führt. Die thermomechanischen Biegewandler 15 werden ebenfalls in an sich bekannter Weise durch eine Oberflächenbeschichtung der Biegebalken 14, 14' mit einem thermoelektrischen oder piezoelektrischen Material beschichtet. Geeignete Materialien hierfür sind beispielsweise ZnO, AlN, PZT oder ein einfaches Metall in Form einer Widerstandsschicht. Insbesondere können die Dünnschichtwandler 16 und die Biegewandler 15 beide auch als piezoelektrische Dünnschichtwandlerwandler aus dem gleichen Material ausgeführt sein, so daß der Dünnschichtwandler 16 zur Detektion der Torsionsschwingung und der Biegewandler 15 zur Erregung der Biegeschwingung dient.

Ein weiteres und besonders günstiges Ausführungsbeispiel sieht vor, daß der Torsionsbalken 12, 12' und/oder der Biegebalken 14, 14' zumindest bereichsweise oberflächlich dotiertes Silizium aufweisen, so daß diese dotierte Siliziumschicht als Piezowiderstand den piezoresistiven Dünnschichtwandler 16 und/oder den thermomechanischen Biegewandler 15 bildet.

Die über die Biegebalken 14, 14' erzeugte Biegeschwingung induziert über die damit verbundenen Torsionsbalken 12, 12' aufgrund der vertikalen Bewegung der Spiegelfläche 11 und deren Trägheit ein Drehmoment, was zu einer Torsionsschwingung der Spiegelfläche 11 um die Torsionsachse 19 führt. Dieses Drehmoment ist dann besonders groß, wenn die Torsionsachse 19 nicht mit einer Symmetrieachse der Spiegelfläche 11 zusammenfällt. Die Torsionsschwingung entsteht jedoch auch, falls die Torsionsachse 19 eine Symmetrieachse ist, da sich in diesem Fall die Spiegelfläche 11 bei der Biegeschwingung in einem sehr labilen Gleichgewicht befindet.

Um eine möglichst große Schwingungsamplitude der Torsionsschwingung zu erreichen, ist es zweckmäßig, die Frequenz der anregenden Biegeschwingung so zu wählen, daß diese mit einer Resonanzfrequenz der Torsionsschwingung zusammenfällt. Gleichzeitig sollte jedoch die dazu erforderliche Anregungsfrequenz nicht gleichzeitig auch eine Resonanzfrequenz der Biegeschwingung sein, da dies zu einer großen Amplitude der Biegeschwingung führt. Apparativ läßt sich die Resonanzfrequenz der Torsions- und Biegeschwingung über die Dimensionierung und die Zusammensetzung der Spiegelfläche 11, der Biegebalken 14, 14' und der Torsionsbalken 12, 12` leicht unabhängig voneinander einstellen.

Um die Torsionsschwingung in Resonanz betreiben zu können, wird das von dem oder den piezoresistiven oder piezoelektrischen Dünnschichtwandlern 16 gelieferte Meßsignal, das proportional zur Amplitude der Torsionsschwingung ist, in an sich bekannter Weise in den Rückkoppelzweig eines in die äußere elektrische Schaltung integrierten Resonators eingekoppelt, der über die thermoelektrischen oder piezoelektrischen Dünnschichtwandler 15 die Biegeschwingung der Biegebalken 14, 14' induziert und nach Amplitude und Frequenz bestimmt. Somit wird über diese integrierte Regelung, die Frequenz zur Erregung der Biegeschwingung so gesteuert, daß sich die Torsionsschwingung in Resonanz befindet.

Das erläuterte Ausführungsbeispiel läßt sich im übrigen in offensichtlicher Weise dahingehend modifizieren, daß, bei ausreichender mechanischer Stabilität des Torsionsbalkens 16 und des Biegebalkens 14, die Spiegelfläche 11 nur mit einem Torsionsbalken 16 verbunden ist, der über seine Richtung gleichzeitig die Torsionsachse 19 definiert und der die Spiegelfläche 11 frei trägt. Ansonsten ist der Aufbau in diesem Fall analog dem erläuterten Ausführungsbeispiel. Diese Konstruktion ist jedoch mechanisch störanfälliger und die erzeugte Torsionsschwingung ist instabiler.

Weiterhin kann die Spiegelfläche 11, die im übrigen nahezu jede geometrische Form annehmen kann, beispielsweise auch mit vier Torsionsbalken versehen sein, die beispielsweise zwei zueinander senkrechte Torsionsachsen definieren und die jeweils mit einem zugehörigen Biegebalken verbunden sind. In diesem Fall lassen sich beispielsweise zwei Torsionsschwingungen unterschiedlicher oder gleicher Frequenz überlagern, so daß die Spiegelfläche 11 ähnlich der Bahnkurve einer Lissajou-Figur beispielsweise Licht nicht mehr nur innerhalb einer Ebene reflektiert, sondern den gesamten darüberliegenden Raum erfassen kann. Dabei können beide Torsionsschwingungen weitgehend unabhängig voneinander erregt und gesteuert werden, wobei ihre Schwingungsfrequenzen sich unter anderem aufgrund der Geometrie und der Anordnung der Torsionsbalken an der Spiegelfläche 11 ergeben.

Die Figur 2 zeigt zur Verdeutlichung des Ausbaus des Mikrospiegels 10 einen Schnitt durch Figur 1 entlang der eingezeichneten Schnittlinie. Die Spiegelfläche 11 ist oberflächlich mit einer Oberflächenmetallisierung 17 versehen. Der Mikrospiegel 10 ist dabei in an sich bekannter Weise aus einem Siliziumwafer herausstrukturiert worden, der aus einer Basisschicht 23 aus Silizium besteht, auf der sich eine Trennschicht 22 aus einem Siliziumoxid befindet, auf der wiederum eine weitere Siliziumschicht 21 nach der Art eines SOI-Wafers ("Silicon-on-Insulator") aufgebracht ist. Das Herausstrukturieren des Mikrospiegels 10 erfolgt nun derart, daß zunächst auf der Oberfläche die Wandler 15, 16, die Oberflächenmetalliserung 17, die Leiterbahnen 25 und die Kontaktflächen 18, 19 aufgebracht werden. Danach wird in dem Wafer rückseitig, beispielsweise durch naßchemisches, anisotropes Ätzen, eine Grube 20 geöffnet und es werden auf der Oberfläche des Wafers über an sich bekannte Maskiertechniken und mittels bekannter Siliziumätzverfahren die Spiegelfläche 11, die Torsionsbalken 12, 12' und die Biegebalken 14, 14' herausstrukturiert. Im letzten Verfahrensschritt werden dann beispielsweise durch rückseitiges selektives Ätzen der Trennschicht 22 aus Siliziumoxid die Spiegelfläche 11, die Biegebalken 14, 14' und die Torsionsbalken 12; 12' freigelegt, so daß diese freitragend mit dem Tragkörper 13 verbunden sind.

Ein alternatives Herstellungsverfahren geht von einem Siliziumwafer aus, auf dem zunächst eine Trennschicht beispielsweise aus Si₃N₄, SiO₂, Siliziumoxynitrid oder einem leitfähigen Material aufgebracht wird. Im Fall, daß die Trennschicht elektrisch leitend ist, wird zusätzlich eine weitere Isolationsschicht auf der Trennschicht aufgebracht. Das weitere Herstellungsverfahren des Mikrospiegels 10 ist dann analog wie im ersten Herstellungsverfahren.

Eine dritte Variante eines Herstellungsverfahrens des Mikrospiegels 10 wird anhand der Figur 3 erläutert. Dabei wird auf einer Basisschicht 23 aus Silizium eine Opferschicht 24 abgeschieden, die aus einem selektiv wegätzbaren Werkstoff wie SiO₂ oder porösem Silizium besteht, und die nach dem Herausstrukturieren der Spiegelfläche 11, der Torsionsbalken 12, 12', der Biegebalken 14, 14', dem Aufbringen der Oberflächenmetallisierung 17, der Leiterbahnen 25, der Kontaktflächen 18, 19 und der Wandler 15, 16 beispielsweise über einen an sich bekannten, für die Opferschicht 24 selektiven Ätzprozeß entfernt wird, so daß unter der Spiegelfläche 11 ein Hohlraum 27 entsteht. Dieses Herstellungsverfahren ist voll CMOS-kompatibel, da dazu kein naßchemisches Siliziumätzen erforderlich ist, so daß die Herstellung des Mikrospiegels 10 problemlos in eine bestehende Halbleiterlinie implementiert werden kann. Dabei wird gleichzeitig eine deutliche Reduzierung der Maskenzahl erreicht, da keine Elektrodenflächen unterhalb der Spiegelfläche 11 benötigt werden.

Die Regelung der Biegeschwingung und die gesamte äußere elektrische Schaltung können im übrigen ebenfalls auf dem Wafer angeordnet werden, aus dem auch der Mikroschwingspiegel 10 herausstrukturiert wurde.

## Patentansprüche

1. Mikroschwingspiegel mit einer freitragenden Spiegelfläche (11), die über mindestens eine, durch mindestens einen an der Spiegelfläche (11) angebrachten Torsionsbalken (12, 12') gebildete Torsionsachse (19) mit einem die Spiegelfläche (11) zumindest bereichsweise umgebenden Tragkörper (13) verbunden ist, **dadurch gekennzeichnet, daß** sich mindestens zwischen einem der Torsionsbalken (12, 12') und dem Tragkörper (13) ein Biegebalken (14, 14') befindet, der eine Biegeschwingung ausführt, die eine Torsionsschwingung der Spiegelfläche (11) um die Torsionsachse (19) induziert.

2. Mikroschwingspiegel nach Anspruch 1, **dadurch gekennzeichnet, daß** mindestens eine der Torsionsachsen (19) keine Symmetrieachse der Spiegelfläche (11) ist.

3. Mikroschwingspiegel nach Anspruch 1 oder 2, **dadurch gekennzeichnet, daß** die Torsionsachse (19) durch zwei gegenüberliegende Torsionsbalken (12, 12') gebildet ist.

4. Mikroschwingspiegel nach Anspruch 1, **dadurch gekennzeichnet, daß** die Biegeschwingung mit einer Frequenz erfolgt, die einer Torsionsresonanzfrequenz der Torsionsschwingung um die Torsionsachse (19) entspricht.

5. Mikroschwingspiegel nach Anspruch 1, **dadurch gekennzeichnet, daß** die Frequenz der Biegeschwingung so eingestellt ist, daß die Resonanzfrequenz der Biegeschwingung deutlich verschieden ist von der Resonanzfrequenz der Torsionsschwingung.

6. Mikroschwingspiegel nach Anspruch 1, **dadurch gekennzeichnet, daß** die Amplitude der Biegeschwingung erheblich kleiner als die Amplitude der Torsionsschwingung ist.

7. Mikroschwingspiegel nach Anspruch 1, **dadurch gekennzeichnet, daß** die durch die Längsachse des Biegebalkens (14, 14') definierte Richtung von der Richtung der Torsionsachse (19) verschieden ist.

8. Mikroschwingspiegel nach Anspruch 1 oder 7, **dadurch gekennzeichnet, daß** der Biegebalken (14, 14') und der Torsionsbalken (12, 12') in einem Winkel von 90° miteinander verbunden sind.

9. Mikroschwingspiegel nach Anspruch 1, **dadurch gekennzeichnet, daß** die Spiegelfläche (11) und/oder der Torsionsbalken (12, 12') und/oder der Biegebalken (14, 14') zumindest bereichsweise oberflächlich metallisiert sind.

10. Mikroschwingspiegel nach Anspruch 1, **dadurch gekennzeichnet, daß** die Spiegelfläche (11) und/oder der Torsionsbalken (12, 12') und/oder der Biegebalken (14, 14') Silizium enthält oder aus Silizium besteht.

11. Mikroschwingspiegel nach mindestens einem der vorangehenden Ansprüche, **dadurch gekennzeichnet, daß** auf dem Biegebalken (14, 14') zumindest einseitig mindestens ein mit dem Biegebalken (14, 14') verbundener thermoelektrischer oder piezoelektrischer Biegewandler (15) angebracht ist, der über eine äußere elektrische Schaltung die Biegeschwingungen in dem Biegebalken (14, 14') induziert.

12. Mikroschwingspiegel nach Anspruch 1, **dadurch gekennzeichnet, daß** auf dem Torsionsbalken (12, 12') zumindest bereichsweise ein piezoresistiver oder ein piezoelektrischer Wandler (16) angebracht ist, der insbesondere die Amplitude der Torsionsschwingung detektiert.

13. Mikroschwingspiegel nach Anspruch 1 oder 11, **dadurch gekennzeichnet, daß** der Torsionsbalken (12, 12') und/oder der Biegebalken (14, 14') aus Silizium bestehen, das oberflächlich derart dotiert ist, daß die dotierte Siliziumschicht als Piezowiderstand den piezoresistiven Wandler (16) und/oder den thermomechanischen Biegewandler (15) bildet.

14. Mikroschwingspiegel nach mindestens einem der vorangehenden Ansprüche, **dadurch gekennzeichnet**, der piezoresistive oder piezoelektrische Wandler (16) auf dem Torsionsbalken (12, 12') sich im Rückkoppelzweig eines Resonators befinden, der den thermomechanischen oder piezoelektrischen Biegewandler (15) auf dem Biegebalken (14, 14') steuert, so daß das Meßsignal des die Amplitude der Torsionsschwingung detektierenden piezoresistiven oder piezoelektrischen Wandlers (16) die Frequenz der Biegeschwingung regelt.

15. Mikroschwingspiegel nach Anspruch 1, **dadurch gekennzeichnet, daß** dieser durch an sich bekannte oberflächenmikromechanische Strukturierungsverfahren, insbesondere Siliziumätztechniken, auf einem Siliziumwafer ausgebildet ist, auf dem auch eine erforderliche elektrische Ansteuerung und Verschaltung untergebracht ist.

## Claims

1. Deflectable micromirror having an unsupported reflecting face (11) which is connected to a carrying body (13) surrounding the reflecting face (11) at least in part via at least one torsion axis (19) formed by at least one torsion beam (12, 12') fitted on the reflecting face (11), **characterized in that** located at least between one of the torsion beams (12, 12') and the carrying body (13) is a bending beam (14, 14') which executes a bending vibration which induces a torsion vibration of the reflecting face (11) about the torsion axis (19).

2. Deflectable micromirror according to Claim 1, **characterized in that** at least one of the torsion axes (19) is not an axis of symmetry of the reflecting face (11).

3. Deflectable micromirror according to Claim 1 or 2, **characterized in that** the torsion axis (19) is formed by two opposite torsion beams (12, 12').

4. Deflectable micromirror according to Claim 1, **characterized in that** the bending vibration occurs at a frequency which corresponds to a torsion resonant frequency of the torsion vibration about the torsion axis (19).

5. Deflectable micromirror according to Claim 1, **characterized in that** the frequency of the bending vibration is set such that the resonant frequency of the bending vibration differs greatly from the resonant frequency of the torsion vibration.

6. Deflectable micromirror according to Claim 1, **characterized in that** the amplitude of the bending vibration is considerably smaller than the amplitude of the torsion vibration.

7. Deflectable micromirror according to Claim 1, **characterized in that** the direction defined by the longitudinal axis of the bending beam (14, 14') differs from the direction of the torsion axis (19).

8. Deflectable micromirror according to Claim 1 or 7, **characterized in that** the bending beam (14, 14') and the torsion beam (12, 12') are connected to one another at an angle of 90°.

9. Deflectable micromirror according to Claim 1, **characterized in that** reflecting face (11) and/or the torsion beam (12, 12') and/or the bending beam (14, 14') are metallized at least partially on the surface.

10. Deflectable micromirror according to Claim 1, **characterized in that** the reflecting face (11) and/or the torsion beam (12, 12') and/or the bending beam (14, 14') contain/contains silicon or consist/consists of silicon.

11. Deflectable micromirror according to at least one of the preceding claims, **characterized in that** fitted on the bending beam (14, 14') at at least one end is at least one thermoelectric or piezoelectric bending transducer (15) which is connected to the bending beam (14, 14') and induces the bending vibrations in the bending beam (14, 14') via an external electric circuit.

12. Deflectable micromirror according to Claim 1, **characterized in that** fitted at least partially on the torsion beam (12, 12') is a piezoresistive or piezoelectric transducer (16) which, in particular, detects the amplitude of the torsional vibration.

13. Deflectable micromirror according to Claim 1 or 11, **characterized in that** the torsion beam (12, 12') and/or the bending beam (14, 14') consist/consists of silicon which is doped on the surface in such a way that, as piezoresistor, the doped silicon layer forms the piezoresistive transducer (16) and/or the thermomechanical bending transducer (15).

14. Deflectable micromirror according to at least one of the preceding claims, **characterized in that** the piezoresistive or piezoelectric transducer (16) is located on the torsion beam (12, 12') in the feedback loop of a resonator which controls the thermomechanical or piezoelectric bending transducer (16) on the bending beam (14, 14') such that the measurement signal of the piezoresistive or piezoelectric transducer (16) detecting the amplitude of the torsional vibration regulates the frequency of the bending vibration.

15. Deflectable micromirror according to Claim 1, **characterized in that** said deflectable micromirror is constructed with the aid of surface micromechanical structuring methods which are known per se, in particular silicon etching techniques, on a silicon wafer on which a requisite means for electrical driving and interconnecting is also accommodated.

## Revendications

1. Micromiroir oscillant avec une surface de miroir (11) suspendue et reliée par au moins un axe de torsion (19) formé sur une poutre de torsion (12, 12') rapportée sur la surface de miroir (11), à un corps de torsion (13) entourant au moins partiellement la surface de miroir (11),
**caractérisé en ce qu'**
au moins entre l'une des poutres de torsion (12, 12') et le corps de support (13) une poutre de flexion (14, 14') est prévue pour exécuter une flexion ondulée qui induit une torsion ondulée de la surface de miroir (11) autour l'axe de torsion (19).

2. Micromiroir oscillant selon la revendication 1,
**caractérisé en ce qu'**
au moins l'un des axes de torsion (19) n'est pas un axe de symétrie de la surface de miroir (11).

3. Micromiroir oscillant selon la revendication 1 ou 2,
**caractérisé en ce que**
l'axe de torsion (19) est formé par deux poutres de torsion (12, 12') situées en regard.

4. Micromiroir oscillant selon la revendication 1,
**caractérisé en ce que**
la flexion ondulée s'effectue à une fréquence qui correspond à une fréquence de résonance de torsion de la torsion ondulée autour de l'axe de torsion (19).

5. Micromiroir oscillant selon la revendication 1,
**caractérisé en ce que**
la fréquence de la flexion ondulée est réglée de manière à ce que la fréquence de résonance de la flexion ondulée se distingue nettement de la fréquence de résonance de la torsion ondulée.

6. Micromiroir oscillant selon la revendication 1,
**caractérisé en ce que**
l'amplitude de la flexion ondulée est considérablement inférieure à l'amplitude de la torsion ondulée.

7. Micromiroir oscillant selon la revendication 1,
**caractérisé en ce que**
la direction définie par l'axe longitudinal de la poutre de flexion (14, 14') est différente de la direction de l'axe de torsion (19).

8. Micromiroir oscillant selon la revendication 1 ou 7,
**caractérisé en ce que**
la poutre de flexion (14, 14') et la poutre de torsion (12, 12') sont reliées l'une à l'autre dans un angle de 90°.

9. Micromiroir oscillant selon la revendication 1,
**caractérisé en ce que**
la surface de miroir (11) et/ou la poutre de torsion (12, 12') et/ou la poutre de flexion (14, 14') sont au moins partiellement métallisées en surface.

10. Micromiroir oscillant selon la revendication 1,
**caractérisé en ce que**
la surface de miroir (11) et/ou la poutre de torsion (12, 12') et/ou la poutre de flexion (14, 14') contiennent du silicium ou sont réalisées en silicium.

11. Micromiroir oscillant selon au moins l'une des revendications précédentes,
**caractérisé en ce que**
sur au moins un côté de la poutre de flexion (14, 14') est disposé au moins un convertisseur de flexion (15) thermoélectrique ou piézoélectrique relié à la poutre de flexion (14, 14') et qui induit les flexions ondulées dans la poutre de flexion (14, 14') par un circuit électrique externe.

12. Micromiroir oscillant selon la revendication 1,
**caractérisé en ce que**
sur la poutre de torsion (12, 12') un convertisseur (16) piézorésistif ou piézoélectrique est disposé au moins partiellement, pour détecter en particulier l'amplitude de la torsion ondulée.

13. Micromiroir oscillant selon la revendication 1 ou 11,
**caractérisé en ce que**
la poutre de torsion (12, 12') et/ou la poutre de flexion (14, 14') sont en silicium et leur surface est dopée de telle sorte que la couche de silicium dopée forme, en tant que piézo-résistance, le convertisseur piézorésistif (16) et/ou le convertisseur de flexion (15) thermomécanique.

14. Micromiroir oscillant selon au moins l'une des revendications précédentes,
**caractérisé en ce que**
le convertisseur (16) piézorésistif ou piézoélectrique sur la poutre de torsion (12, 12') se situe dans la branche de réinjection d'un résonateur qui commande le convertisseur de flexion (15) thermomécanique ou piézoélectrique sur la poutre de flexion (14, 14') de telle sorte, que le signal de mesure du convertisseur (16) piézorésistif ou piézoélectrique détectant l'amplitude de la torsion ondulée régule la fréquence de la flexion ondulée.

15. Micromiroir oscillant selon la revendication 1,
**caractérisé en ce qu'**
il est formé à l'aide de procédés de structuration micromécaniques de surface connus, en particulier de techniques de gravure de silicium, sur une plaquette de silicium recevant également une commande et un circuit électriques nécessaires.
